# EUROPEAN PATENT SPECIFICATION

(11) **EP 3 587 180 B1**
(45) Date of publication and mention of the grant of the patent: **08.09.2021**
(21) Application number: 19183254.2
(22) Date of filing: 28.06.2019
(51) Int. Cl.: B60P 3/22

(54) **CISTERN FOR THE TRANSPORT OF HAZARDOUS FLUID MATERIALS**
ZISTERNE FÜR DEN TRANSPORT VON GEFÄHRLICHEN FLÜSSIGKEITEN
CITERNE POUR LE TRANSPORT DE MATIÈRES FLUIDES DANGEREUSES

(30) Priority: 28.06.2018 IT 201800006783
(43) Date of publication of application: 01.01.2020
(73) Proprietor: Sara BSK S.r.l., 29010 Pontenure (PC) (IT)
(72) Inventor: Cremona, Diego, 29010 Ponteneure (PC) (IT)
(74) Representative: Fisauli, Beatrice A. M.

(56) References cited:
- EP-A1- 2 058 245
- EP-A1- 2 412 647
- US-A- 2 074 523
- US-A- 2 239 507
- US-A- 2 606 039
- US-A- 4 611 724

## Description

The present invention concerns a tank assembly for road transport of hazardous fluid materials, in particular harmful and/or flammable chemicals. In further detail, the invention concerns a fixed tank assembly, namely of the type permanently fixed on a self-supporting chassis.

It is known that the road transport of hazardous goods is regulated by specific laws such as, for example, the ADR regulations, which also define some tank assembly design parameters.

In accordance with these regulations, tank assemblies intended for the transport of hazardous chemical products in the liquid state generally comprise a substantially cylindrical tank, the ends of which are closed by a pair of torispherical end plates.

The inner volume of the tank assembly can comprise one single compartment or several compartments delimited by inner walls also called closed diaphragms.

According to the regulations cited, the tank assemblies with compartments having a capacity higher than a given threshold (typically 7500 litres according to the ADR regulations) must be equipped with open diaphragms also known as "breakwaters".

The function of said open diaphragms is to limit the longitudinal movement of the liquid in the compartment, reducing the possible effects of said movement on the stability of the vehicle.

Said open diaphragms, furthermore, like the closed ones, perform a structural function contributing to the resistance of the tank assembly casing.

In the state of the art, open diaphragms consist of a bulkhead provided with an opening that establishes communication between two adjacent zones of the same compartment but which, at the same time, acts as a barrier to reduce and slow down the movement thereof.

According to a typical embodiment, said bulkhead is torispherical and the opening, usually circular, is positioned substantially in the centre. Such tank assemblies are known e.g. from US 2 239 507 A, US 2 606 039 A, EP 2 058 245 A1 or US 4 611 724 A.

However, the diaphragm shaped as above is not very practical for operators who have to carry out the usual inspections and maintenance on the tank assembly since said operations have to be performed from the inside. In particular the reduced dimension of the opening (according to the ADR regulations it cannot exceed 30% of the tank assembly cross section) makes the passage of a person from one zone to another of the compartment, through the above-mentioned opening, fairly difficult. Said difficulties are even more marked in the event of accidents or emergency interventions, when it may be necessary to remove an unconscious person from the inside of the tank assembly.

The torispherical shape of the diaphragms, furthermore, necessarily requires the application of counter end plates in the connection zone with the inner surface of the tank to prevent accumulation of residues of the product previously transported, also after the usual emptying and cleaning operations. Said residues, in fact, can cause both contamination of the product introduced subsequently and dangerous chemical reactions or even explosions if flames or sparks are used in the presence of flammable liquids.

To avoid this, the cavity between the wall of the diaphragm and the counter end plates must be watertight. To verify the conformity of the counter end plates and the relative weldings, hydraulic tests are therefore carried out in which said cavity is pressurized with a liquid. Adoption of the counter end plates, therefore, increases both the construction complexity of the tank assembly and the production cost thereof.

The tank is generally fixed to the chassis by means of curved supports called "saddles". The saddles, in general, are positioned at reinforced points of the tank between which are the sections corresponding to the internal diaphragms. In the known tank assemblies the saddles are typically applied to the tank by means of welding.

The presence of the weldings of the diaphragms, of the counter end plates and of the saddles, all in the same area of the tank, determines the creation of thermally altered zones which inevitably have a reduced mechanical resistance with respect to the rated values.

Since, often, the products transported are kept heated (up to 200° C) said zones are even more critical following expansions due to the temperature.

Said zones where there is a concentration of several elements welded to one another furthermore create undesired thermal bridges which increase the heat loss when heated products are transported.

Another improvable aspect of the tank assemblies of the known art concerns the positioning of the tank relative to the chassis and in particular its height from the ground. Generally speaking, in fact, it is always preferable to arrange the tank on the chassis so that the centre of gravity of the former is as low as possible. This is useful to make the tank assembly more stable both in normal running conditions and in precarious conditions, such as sudden braking or turning.

However, said tank cannot be lowered beyond a certain limit since it would interfere with the two I-beams constituting the chassis of the majority of known tank assemblies. Moreover, it is not even possible to widen the chassis beams beyond a certain limit since the axles and suspensions are fixed on the lower part of said beams and, therefore, their distance is almost standard.

In the sector the need is therefore felt for a tank assembly for the transport of hazardous liquid materials such as, for example, harmful, flammable and/or explosive chemicals, which overcomes the limits of the tank assemblies in the known art.

In particular, the object of the present invention is to propose a tank assembly that makes the inspection and maintenance operations carried out inside the compartments safer.

A further object of the present invention is to provide a tank assembly which is simpler in construction terms and, therefore, quicker and cheaper to produce.

A further object of the present invention is to make available a tank assembly that has less heat loss during the transport of heated products.

The object of the present invention is furthermore to provide a tank assembly that allows lowering of the centre of gravity of the self-supporting chassis on which it is installed.

These and further objects are achieved by a tank assembly for the transport of hazardous fluid materials, of the type adapted to be mounted on a self-supporting chassis provided with wheels, comprising a substantially cylindrical tank delimited by an inner surface and by an outer surface and closed at the ends, inside which at least one compartment is defined.

Said compartment is provided with at least one open diaphragm which defines two adjacent zones. The diaphragm comprises a bulkhead, connected to the inner surface of the tank, provided with an opening that establishes communication between said adjacent zones of the same compartment. According to the invention, said opening is shaped in such a way that its largest dimension is arranged in a substantially vertical direction. In further detail, said opening is delimited by two lateral edges which extend in a substantially vertical direction, namely between the bottom of the tank and the top thereof. The diaphragm thus shaped has numerous advantages.

The arrangement of the opening, in fact, allows a person to cross it easily even in an upright position, making tank assembly inspection and maintenance operations more practical.

Said arrangement of the opening, furthermore, is safer in the event of accidents or other emergency situations as it allows both more rapid evacuation of the compartment and facilitates operations for the rescue and removal of an unconscious or injured person.

This is possible also due to the position of the lower side of the opening which is, preferably, substantially in the area of the inner surface of the tank.

Unlike the known diaphragms, it is therefore not necessary to climb over obstacles during passage through the diaphragm.

According to a preferred variation, the lateral edges of the opening lie on respective planes preferably vertical and parallel to one another. Said planes are, preferably, parallel also to the axis of the tank.

In practice, observing the diaphragm in a direction parallel to the axis of the tank, said lateral edges are substantially rectilinear.

The width of the opening, namely the distance between the lateral edges, is such as to allow a person to cross it in a substantially upright position. Typically, the distance between said lateral edges is between 40 cm and 60 cm and more preferably between 45 cm and 55 cm.

According to the invention, the lateral edges also extend upwards into the vicinity of the inner surface of the tank.

According to the invention, the tank assembly comprises a compartment with two or more open diaphragms, as described above, adapted to define several zones communicating with one another.

According to the invention, the centre line axes of the openings of two consecutive diaphragms are shifted from the centre line of the tank towards respective opposite directions. In practice said consecutive openings are laterally decentralized towards opposite sides of the tank.

This arrangement increases the damping effect on the fluid which moves in the compartment without affecting the tank filling or emptying operations or the passage of persons through the openings.

The thickness of the diaphragm, typically made of stainless steel, is such as to withstand the forces generated by the movement of the fluid inside the compartment. Typically the diaphragm has a thickness ranging from 3 mm to 6 mm.

According to another aspect of the invention, the diaphragm can have a spherical profile. The profile has a radius preferably ranging from 1.2 m to 2.5 m. Said shape, unlike the torispherical shape of the diaphragms of the known art, does not have peripheral zones in which undesired residues of the product transported can accumulate.

The tank assembly according to the invention therefore eliminates, or significantly reduces, the risk of contamination of the content due to mixing with residues of another product or, worse, the risk of triggering chemical reactions or explosions.

Due to said shape, the diaphragm according to the invention does not require counter end plates, considerably simplifying assembly of the tank assembly and significantly reducing the number of weldings.

The absence of counter end plates, furthermore, allows elimination of the drainage systems that equip the known tank assemblies, with further reduction in the complexity and costs of the tank assembly.

According to a preferred variation, the bulkhead is connected to the inner surface of the tank by means of a T-section. In further detail, said T-section is interposed between the inner surface of the tank and the outer perimeter of the diaphragm. Preferably, said T-section has a lengthwise extension substantially coinciding with that of the perimeter edge of the diaphragm.

The combined presence of the T-section and the spherical diaphragm in the same zone, or section, of the tank makes the above-mentioned zone particularly resistant.

Due to this it is possible to adopt smaller supporting elements, or saddles, which allow lower positioning of the tank, thus lowering the centre of gravity of the tanker vehicle.

According to a preferred variation, for each fixing section two supporting elements are provided positioned on opposite sides of the tank.

Advantageously, said supporting elements are connected to the tank by means of bolts or similar. In further detail, said supporting elements are fixed by means of bolts or similar to perimeter bands positioned around the outer surface of the tank.

The tank assembly thus produced requires fewer weldings than the known tank assemblies and is therefore quicker and cheaper to produce.

Said fixing, furthermore, allows insulating material to be interposed between the saddles and said perimeter bands, thus interrupting the thermal bridges with the rest of the structure.

The above-mentioned objects are achieved also by a tanker vehicle in which the chassis comprises two longitudinal beams formed of respective substantially Z or S sections obtained by bending process.

Compared to the I or double T beams of the known chassis, those of the tanker vehicle do not require weldings and therefore make the chassis both more resistant and cheaper to produce. Furthermore the absence of weldings completely eliminates the problem of residual deformations generated during the welding process.

Advantageously, said shape of the beams also allows more space to be obtained between them, allowing the tank to be positioned in a position nearer to the ground.

According to a preferred variation, the section of the beam comprises a central core arranged substantially vertically and two wings which extend transversely from the respective ends of the core in opposite directions. In particular the upper wings extend towards the outside of the chassis while the lower wings extend towards the inside.

Therefore, the width of the lower wings being equal, where the axes and the suspensions are connected, the cores and the upper wings are in a position farther from the centre line of the tank assembly, allowing the tank to be further lowered before it interferes with the chassis.

With the chassis configured according to the present invention, it is possible to reduce the centre of gravity down to 100 mm and even more compared to the chassis with I-beams of the known art.

Due to the respective configurations described above, both the tank and the chassis are also much lighter than the known ones, significantly reducing the fuel consumption of the vehicle transporting the tank assembly. The lighter weight of the tank assembly furthermore allows a higher load with the same total vehicle mass.

Further characteristics and advantages of the present invention will appear clearer from the description of a preferred but not exclusive embodiment of a tank assembly as illustrated in the attached figures in which:
- figure 1 is a perspective view of a tank assembly according to the invention;
- figure 2 is a perspective view of the tank assembly of figure 1 with the casing of the tank partially removed;
- figure 3 is a lateral view of the tank of the tank assembly of figure 1;
- figure 4 is an overhead view of the tank of figure 3;

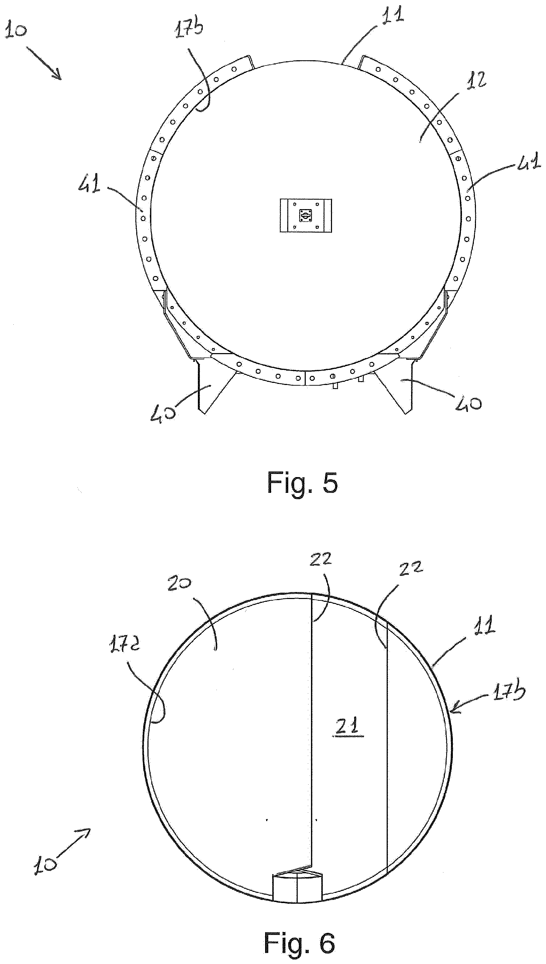

- figure 5 is a front view of the tank of figure 3;
- figure 6 is a front view of the tank of figure 3, sectioned along a vertical plane transverse to the axis of development of the tank;
- figures 7a and 7b are respectively a perspective view and a section view of a detail of the fixing zone of the tank to the chassis;
- figure 8 is a cross section view of the beams of the chassis of a tanker vehicle according to the invention.

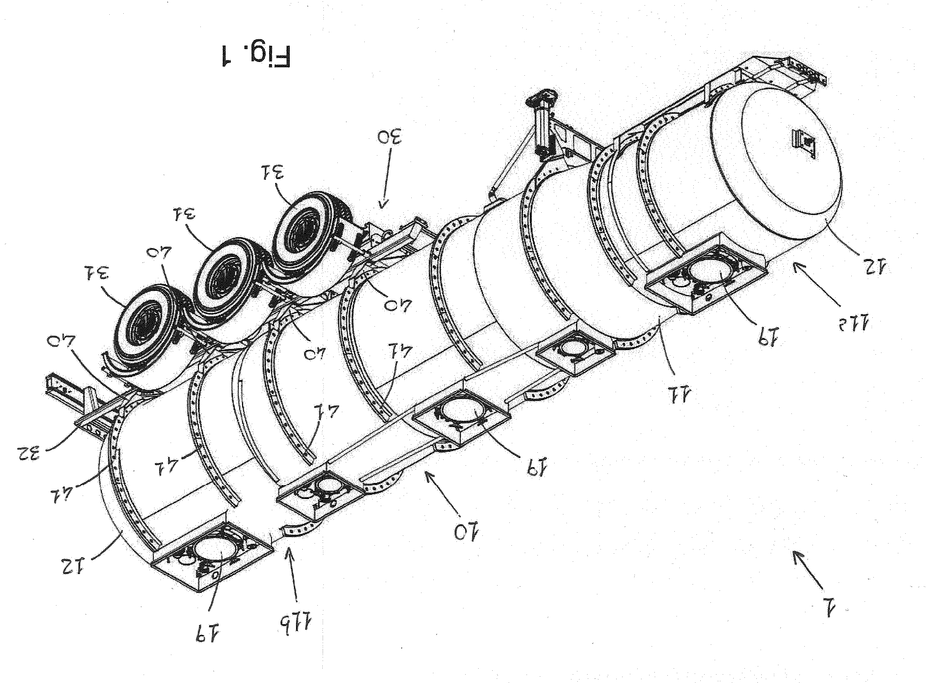

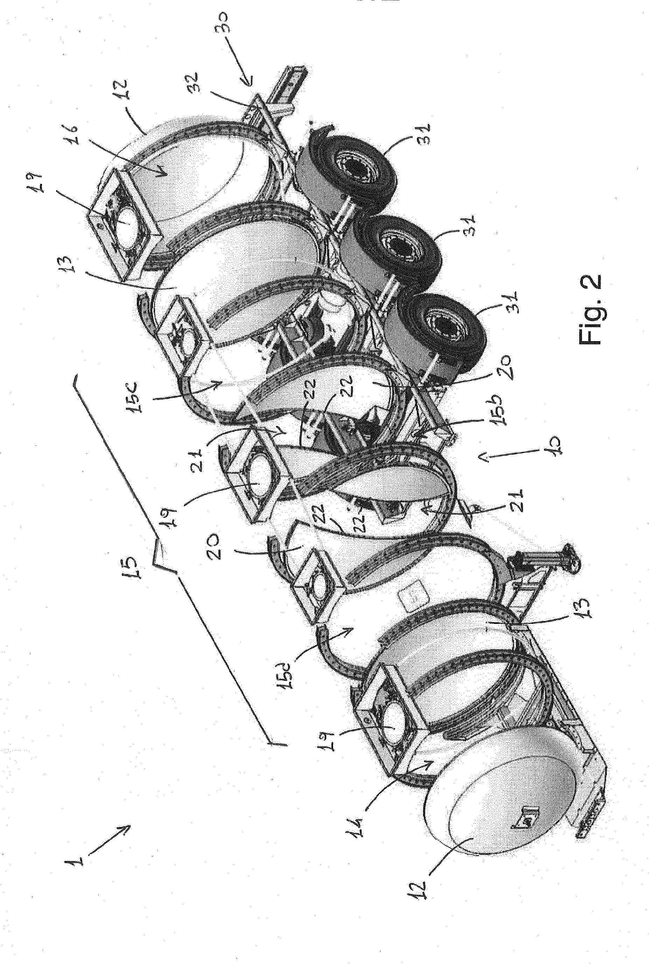

With reference to the attached figures 1 and 2, the number 1 shows a tank assembly suitable for the transport of hazardous fluid materials such as harmful and/or corrosive and/or flammable and/or explosive and/or contaminating chemicals or similar.

The tank assembly 1 can be installed on a self-supporting chassis 30 provided with wheels 31 to form a tanker vehicle.

In the example shown, the chassis 30 is of the type suited to be towed by a towing vehicle, but the tank assembly according to the invention can also be used on a self-propelled tanker vehicle.

The tank assembly comprises a tank indicated in the complex by the number 10.

The tank 10 comprises a substantially cylindrical-shaped casing 11, delimited by an inner surface 17a and an outer surface 17b and closed at each end by an end plate 12, typically torispherical. The casing 11 can have a constant section or, as in the example of the figures, two or more sections 11a, 11b with smaller and larger section respectively.

The inside of the tank 10 is divided into compartments delimited by closed diaphragms 13.

Each compartment can be accessed from a hatch 19, also called "manhole", positioned in the upper part of the tank.

In the example of the figures, the tank comprises two end compartments 14, 16 and one central compartment 15. Said central compartment 15 is in turn divided into three zones 15a, 15b, 15c, delimited by open diaphragms 20.

The structure of the tank 10 illustrated above should be considered purely as an example since the arrangement and the number of compartments and diaphragms, open or closed, can vary according to requirements.

In the embodiment example illustrated, both the closed diaphragms 13 and the open diaphragms 20 comprise a bulkhead with spherical profile with a radius of approximately 1.8 m.

The diaphragms 13, 20 are welded to a profile 18, with T-shaped section, applied to the inner surface 17a of the tank again by means of welding.

The open diaphragms 20 have an opening 21 delimited by lateral edges 22 which extend in a substantially vertical direction. Preferably, said lateral edges 22 lie on planes substantially vertical and parallel to the axis X of the tank 10.

As illustrated, and according to the invention, said lateral edges 22 extend both upwards and downwards into the vicinity of the inner surface 17a of the tank 10.

The width of the opening 21, namely the distance between the facing lateral edges 22, preferably ranges from 45 cm to 55 cm and is typically approximately 50 cm, for a tank having a diameter of approximately 2 m.

The opening 21 thus shaped allows a person to cross it in an upright position without having to climb over obstacles or other elements in the lower part of the tank.

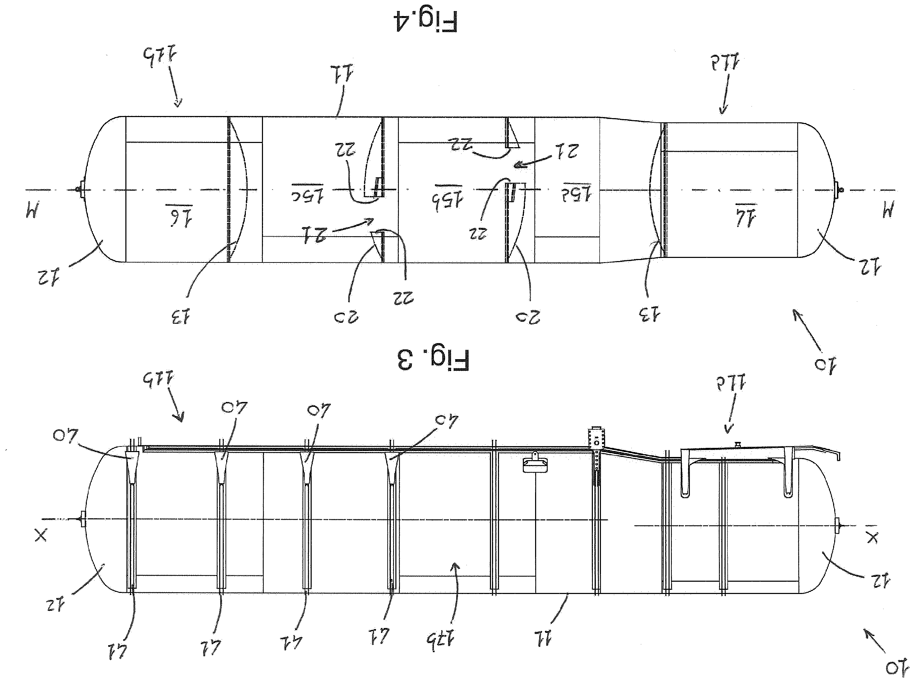

The centre line of the opening 22 is decentralized with respect to the centre line M of the tank 10. According to the invention, the openings 22 of the two consecutive open diaphragms 20 are arranged with the respective centre lines decentralized with respect to that of the tank, towards opposite sides respectively, as can be seen in figure 4.

The tank 10 can be connected to the chassis 30 by means of supporting elements 40, in the shape of a saddle or cradle, distributed at several points along the axis of the tank.

In further detail, several connection sections are provided each comprising a pair of supporting elements fixed at opposite sides of the tank.

Each supporting element is fixed to a beam 32 of the chassis 30.

In the example of the figures, the supporting elements 40 are connected to the tank 10 in the area of the largest section 11b.

According to the invention, said supporting elements 40 are fixed by means of bolts to perimeter bands 41 which surround the outer surface 17b of the tank 10.

Said perimeter bands 41 are preferably fixed to said outer surface 17b by means of weldings.

Between the supporting elements 40 and the perimeter bands 41 at least one layer 42 of insulating material is interposed which interrupts the thermal bridges between the tank and the rest of the tanker vehicle structure.

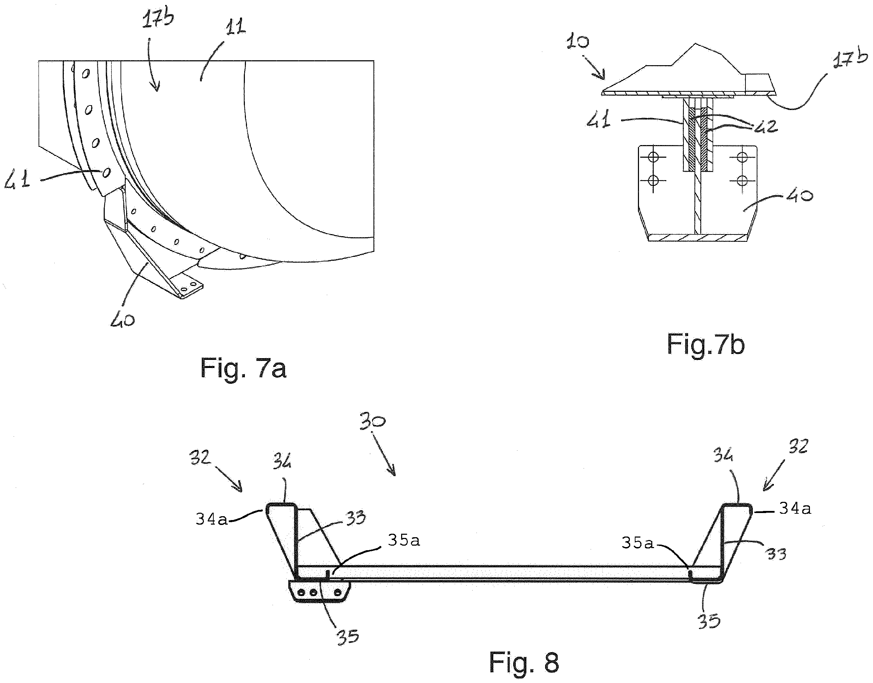

With reference to figure 8 a detail of the chassis 30 is illustrated in section where the beams 32 can be seen.

According to the invention, said beams 32 are advantageously obtained from a metal sheet which is bent and are therefore without weldings.

The section of the beams 30 comprises a central core 33 arranged vertically and two wings 34, 35 which extend substantially perpendicular from the ends of the core. Said wings 34, 35 extend respectively in opposite directions, giving the beam section a substantially Z or S-shaped form. In particular, the upper wings 34 face the outside while the lower wings 35 face the inside.

Preferably, the upper wings 34 and lower wings 35 are each provided with a bent edge 34a, 35a bent transversally with respect to the wing. The presence of said edge increases the resistance and rigidity of the beam 30 and allows the adoption of a metal sheet which is finer in terms of thickness than the ordinary I-sections of the known chassis. In this way it is possible to further reduce the weight of the tank assembly.

The invention has been described for illustrative non-limiting purposes, according to some preferred embodiments. A person skilled in the art will be able to find numerous other embodiments and variations, all falling within the protective scope of the following claims.

## Claims

1. A tank assembly for the transport of hazardous fluid materials, of the type adapted to be mounted on a chassis (30) provided with wheels (31), comprising a substantially cylindrical tank (10), delimited by an inner surface (17a) and an outer surface (17b), closed at the ends and inside which at least a compartment (14, 15, 16) is defined,
wherein said compartment comprises at least two open diaphragms (20) which defines respective adjacent zones (15a, 15b, 15c) of the same compartment,
wherein each of said at least two open diaphragms (20) comprises a bulkhead connected to the inner surface (17a) of the tank (10), said bulkhead being provided with an opening (21) which establishes communication between the two adjacent zones of the compartment, said opening (21) being delimited by two lateral edges (22) which extend in a substantially vertical direction upwards and downwards into the vicinity of the inner surface (17a) of the tank (10),
the tank assembly being **characterised by**
the centre line axes of the openings of two consecutive open diaphragms (20) being shifted from the centre line (M) of the tank (10) towards opposite sides respectively.

2. The tank assembly according to claim 1, wherein the chassis (30) comprises two longitudinal beams (32) formed of respective substantially Z or S sections, obtained by means of bending process.

3. The tank assembly according to claim 2, wherein each longitudinal beam (32) comprises a central core (33) arranged substantially vertical and two wings (34, 35) that extend crosswise from respective ends of the core in opposite directions.

4. The tank assembly according to claim 3, wherein the upper wings (34) and the lower wings (35) of the beam (33) extend respectively towards the outside and towards the inside of the chassis (30).

5. The tank assembly according to any one of the preceding claims, wherein the distance between said lateral edges (22) ranges from 40 cm to 60 cm.

6. The tank assembly according to any one of the preceding claims, wherein the open diaphragm (20) has a spherical profile with a radius ranging from 1.2 m to 2.5 m.

7. The tank assembly according to any one of the preceding claims, wherein the open diaphragm (20) has a thickness ranging from 3 mm to 6 mm.

8. The tank assembly according to any one of the preceding claims, wherein the open diaphragm (20) is connected to the inner surface (17a) of the tank (10) by means of a T-section (18).

9. The tank assembly according to any one of the preceding claims, wherein the tank (10) comprises supporting elements (40) for connection to the chassis (10), said supporting elements (40) being fixed by means of bolts to perimeter bands (41) which surround at least partly the outer surface (17b) of the tank (10).

## Patentansprüche

1. Eine Tank-Baugruppe für den Transport von gefährlichen flüssigen Materialien, von der Art, die dazu geeignet ist, auf einem mit Rädern (31) versehenen Fahrgestell (30) montiert zu werden, umfassend einen im Wesentlichen zylinderförmigen Tank (10), der durch eine Innenfläche (17a) und eine Außenfläche (17b) begrenzt ist, an den Enden geschlossen, und in dessen Innerem mindestens ein Sektor (14, 15, 16) definiert ist,
wobei der besagte Sektor mindestens zwei offene Membranen (20) umfasst, die jeweils benachbarte Zonen (15a, 15b, 15c) desselben Sektors definieren,
wobei die besagte offene Membrane (20) eine Trennwand umfasst, die mit der Innenfläche (17a) des Tanks (10) verbunden ist, wobei die besagte Trennwand mit einer Öffnung (21) versehen ist, die eine Verbindung zwischen den beiden benachbarten Zonen des Sektors herstellt, wobei die besagte Öffnung (21) durch zwei seitliche Kanten (22) begrenzt ist, die sich in einer im Wesentlichen vertikalen Richtung nach oben und nach unten in die Nähe der Innenfläche (17a) des Tanks (10) erstrecken, und
wobei die Mittellinienachsen der Öffnungen von zwei aufeinanderfolgenden offenen Membranen (20) von der Mittellinie (M) des Tanks (10) zu jeweils gegenüberliegenden Seiten hin verschoben sind.

2. Die Tank-Baugruppe gemäß Anspruch 1, wobei das Fahrgestell (30) zwei Längsträger (32) umfasst, die aus jeweiligen im Wesentlichen Z- oder S-Profilen gebildet sind, die mittels eines Biegeverfahrens erzielt werden.

3. Die Tank-Baugruppe gemäß Anspruch 2, wobei jeder Längsträger (32) einen zentralen Kern (33), der im Wesentlichen vertikal angeordnet ist, und zwei Flügel (34, 35) umfasst, die sich quer von den jeweiligen Enden des Kerns in entgegengesetzten Richtungen erstrecken.

4. Die Tank-Baugruppe gemäß Anspruch 3, wobei sich die oberen Flügel (34) und die unteren Flügel (35) des Trägers (33) zur Außenseite bzw. zur Innenseite des Fahrgestells (30) hin erstrecken.

5. Die Tank-Baugruppe gemäß einem jeglichen der vorhergehenden Ansprüche, wobei der Abstand zwischen den besagten seitlichen Kanten (22) im Bereich von 40 cm bis 60 cm liegt.

6. Die Tank-Baugruppe gemäß einem jeglichen der vorhergehenden Ansprüche, wobei die offene Membrane (20) ein kugelförmiges Profil mit einem Radius im Bereich von 1,2 m bis 2,5 m aufweist.

7. Die Tank-Baugruppe gemäß einem jeglichen der vorhergehenden Ansprüche, wobei die offene Membrane (20) eine Dicke im Bereich von 3 mm bis 6 mm aufweist.

8. Die Tank-Baugruppe gemäß einem jeglichen der vorhergehenden Ansprüche, wobei die offene Membrane (20) mit der Innenfläche (17a) des Tanks (10) mittels eines T-Profils (18) verbunden ist.

9. Die Tank-Baugruppe gemäß einem jeglichen der vorhergehenden Ansprüche, wobei der Tank (10) Stützelemente (40) zur Verbindung mit dem Fahrgestell (10) umfasst, wobei die besagten Stützelemente (40) mittels Bolzen an Umfangsbändern (41) befestigt sind, die zumindest teilweise die Außenfläche (17b) des Tanks (10) umgeben.

## Revendications

1. Ensemble réservoir pour le transport de matières fluides dangereuses, du type adapté pour être monté sur un châssis (30) muni de roues (31), comprenant un réservoir substantiellement cylindrique (10), délimité par une surface intérieure (17a) et une surface extérieure (17b), fermé aux extrémités et à l'intérieur duquel est défini au moins un compartiment (14, 15, 16),
où ledit compartiment comprend au moins deux diaphragmes ouverts (20) qui définissent des zones adjacentes respectives (15a, 15b, 15c) du même compartiment,
où ledit diaphragme ouvert (20) comprend une cloison reliée à la surface intérieure (17a) du réservoir (10), ladite cloison étant pourvue d'une ouverture (21) qui établit une communication entre les deux zones adjacentes du compartiment, ladite ouverture (21) étant délimitée par deux bords latéraux (22) qui s'étendent dans une direction substantiellement verticale vers le haut et vers le bas à proximité de la surface intérieure (17a) du réservoir (10), et
où les axes des lignes centrales des ouvertures de deux diaphragmes ouverts consécutifs (20) sont décalés de la ligne centrale (M) du réservoir (10) vers des côtés opposés respectivement.

2. L'ensemble réservoir selon la revendication 1, où le châssis (30) comprend deux poutres longitudinales (32) formées de sections respectives substantiellement en Z ou en S, obtenues au moyen d'un procédé de cintrage.

3. L'ensemble réservoir selon la revendication 2, où chaque poutre longitudinale (32) comprend un noyau central (33) disposé substantiellement verticalement et deux ailes (34, 35) qui s'étendent transversalement à partir des extrémités respectives du noyau dans des directions opposées.

4. L'ensemble réservoir selon la revendication 3, où les ailes supérieures (34) et les ailes inférieures (35) de la poutre (33) s'étendent respectivement vers l'extérieur et vers l'intérieur du châssis (30).

5. L'ensemble réservoir selon l'une des revendications précédentes, où la distance entre lesdits bords latéraux (22) varie de 40 cm à 60 cm.

6. L'ensemble réservoir selon l'une des revendications précédentes, où le diaphragme ouvert (20) a un profil sphérique avec un rayon compris entre 1,2 m et 2,5 m.

7. L'ensemble réservoir selon l'une des revendications précédentes, où le diaphragme ouvert (20) a une épaisseur comprise entre 3 mm et 6 mm.

8. L'ensemble réservoir selon l'une des revendications précédentes, où le diaphragme ouvert (20) est relié à la surface intérieure (17a) du réservoir (10) au moyen d'une section en T (18).

9. L'ensemble réservoir selon l'une des revendications précédentes, où le réservoir (10) comprend des éléments de support (40) pour la connexion au châssis (10), lesdits éléments de support (40) étant fixés au moyen de boulons à des bandes périphériques (41) qui entourent au moins partiellement la surface extérieure (17b) du réservoir (10).
